# EUROPÄISCHE PATENTSCHRIFT

(11) **EP 3 947 267 B1**
(45) Veröffentlichungstag und Bekanntmachung des Hinweises auf die Patenterteilung: **16.08.2023**
(21) Anmeldenummer: 20712331.6
(22) Anmeldetag: 18.03.2020
(51) Int. Cl.: C01B 3/38, B01J 8/06, B01J 8/02

(54) **REFORMERDOPPELBODEN**
REFORMER DOUBLE BOTTOM
REFORMEUR À DOUBLE FOND

(30) Priorität: 04.04.2019 DE 102019204814
(43) Veröffentlichungstag der Anmeldung: 09.02.2022
(73) Patentinhaber: thyssenkrupp Industrial Solutions AG, 45143 Essen (DE); thyssenkrupp AG, 45143 Essen (DE)
(72) Erfinder: MEIßNER, Oliver, 45966 Gladbeck (DE); SCHOLZ, Marco, 44287 Dortmund (DE)
(74) Vertreter: thyssenkrupp Intellectual Property GmbH
(86) Internationale Anmeldenummer: PCT/EP2020/057365
(87) Internationale Veröffentlichungsnummer: WO 2020/200778

(56) Entgegenhaltungen:
- WO-A2-2010/149361
- DE-A1-102011 120 938

## Beschreibung

Die Erfindung betrifft einen Reformer zur Herstellung von Synthesegas sowie zur Dehydrierung von Propan und Butan, eine Anlage zur Herstellung von Ammoniak, Ammoniak und Harnstoff, Dehydrierung von Propan und Butan, Wasserstoff und Methanol umfassend einen erfindungsgemäßen Reformer und ein Verfahren zur Herstellung von Synthesegas.

Die Erzeugung von Wasserstoff, insbesondere zur Herstellung von Ammoniak und Methanol ist ein wichtiger Basisprozess in der chemischen Industrie.

Ammoniak ist die weltweit zweitmeist produzierte synthetische Chemikalie (Ullmannn's Encyclopedia of Industrial Chemistry, 2012, Wiley-VCH Verlag GmbH &Co. KGaA, Weinheim, DOI:10.1002/14356007.o02_o11, im folgenden "Ullmann's").

Die Herstellung von Ammoniak erfolgt dabei im Wesentlichen aus den Elementen Wasserstoff und Stickstoff in Anwesenheit eines Eisenkatalysator. Die Temperaturen bewegen sich häufig im Bereich zwischen 400 °C und 500 °C und bei einem Druck über 100 bar. Der wesentliche Faktor für die Prozesskosten liegen dabei in der Bereitstellung von Wasserstoff aus der Synthesegas Herstellung (Ullmann's, Seite 139).

Eine Erzeugung von Ammoniak erfolgt dementsprechend bevorzugt im Grundsatz wie beispielsweise bei Holleman, Wiberg, Lehrbuch der Anorganischen Chemie, 102 Auflage, 2007, Seiten 662-665 (ISBN 978-3-11-017770-1) beschrieben, basierend auf dem "Haber-Bosch-Verfahren" aus den Elementen gemäß Gleichung [1]:

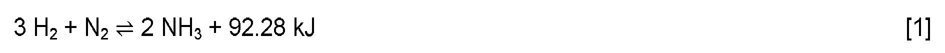

Das Edukt Stickstoff (N₂) kann beispielsweise durch Tieftemperaturluftzerlegung gewonnen werden. Der Wasserstoff wird bevorzugt über den "Steam-Reforming-Prozess" (z.B. wie in Andreas Jess, Peter Wasserscheid, Chemical Technology, An Integrated Textbook, Wiley-VCH, 2013, Seite 536 bis 539, ISBN 978-3-527-30446-2) gemäß Gleichung [2] erhalten:

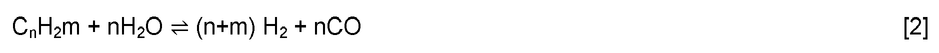

In der anschließenden "Kohlendioxid-Konvertierung" erfolgt eine weitere Umsetzung gemäß Gleichung (3):

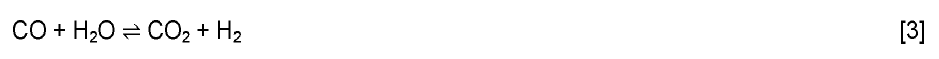

Auch Methanol ist mit einer Jahresproduktion 2007 von 52,1 × 10⁶ t (Saade, G.A. (2009) Chemical Economics Handbook-SRI Consulting) eine bedeutende Grundchemikalie. Wie in "Andreas Jess, Peter Wasserscheid, Chemical Technology, An Integrated Textbook, Wiley-VCH, 2013, Seite 686 bis 694, ISBN 978-3-527-30446-2" beschrieben, lässt sich die Umsetzung vereinfacht über die Gleichungen [4] und [5] beschreiben:

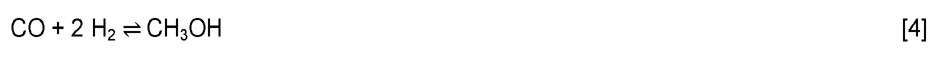

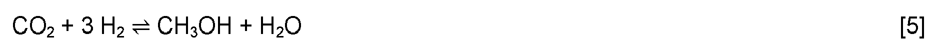

Geeignete Reaktionsbedingungen und Katalysatoren für die Methanolsynthese lassen sich ebenfalls der obigen Literaturstelle entnehmen.

In einer weiteren Anwendung kann der Reformer zur Dehydrierung (Wasserstoffabspaltung) von Propan oder Butan zu Propen bzw. Buten verwendet werden.

Im Primärreformer werden in der endothermen Reformierungsreaktion Kohlenwasserstoffe, wie z.B. Methan mit Hilfe von Wasserdampf in Wasserstoff und Kohlenstoffmonoxid (sowie zum Teil CO₂) gespalten. Es ist im Stand der Technik üblich, dass die notwendige Energie zur Erwärmung des Gas/Wasserdampf-Gemisches und des Katalysators über die Reformerbrenner erfolgt. Die Reformerbrenner übertragen durch das Verbrennen beispielsweise eines Luft/Erdgas Gemisches die Wärme mittels Wärmestrahlung und Konvektion an die Reformerrohraußenwände. Durch Konvektion und Wärmeleitung fließt die Wärme weiter in das Gas/Wasserdampf-Gemisch und den Katalysator, wodurch die Energie für die Reformierungsreaktion bereitgestellt wird. Die im Feuerraum des Primärreformers auftretenden Temperaturen liegen häufig im Bereich von etwa 1000 °C. Dabei werden naturgemäß große Anforderungen an alle im Reformer verbauten Komponenten gestellt. Insbesondere die in Abhängigkeit von der Temperatur unterschiedliche Materialausdehnung kann ursächlich für auftretende Materialermüdung und Beschädigungen sein.

Im besonderen Maße ist hiervon der Reformerboden betroffen. Der Reformerboden wird häufig aus Metallplatten gefertigt, die zum Schutz gegen die im Reformerinnenraum herrschenden Verbrennungstemperaturen mit einer feuerfesten Isolierschicht verkleidet sind. Um eine Begehbarkeit unterhalb des Reformers zu gewährleisten bzw. um Materialspannungen und Materialermüdung der Reformerbodenplatte zu verringern, sowie um die Wärmeverluste niedrig zu halten, darf die Bodenplatte nicht zu heiß werden. Gleichzeitig kann die feuerfeste Isolierschicht sowohl aus Gewichts-, Platz- und Kostengründen nicht beliebig groß bzw. dick ausgelegt werden.

DE 102 26 209 A1 offenbart eine Anlage zur gleichzeitigen Herstellung von Methanol-Synthesegas, Ammoniak-Synthesegas, CO und CO₂ aus Erdgas.

Weitere Verfahren zur Herstellung von Ammoniak werden beispielsweise in der US 4,695,442 A, DE 10 2004 013 539 A1 und US 4,193,776 A offenbart.

EP 3 138 810 A1 offenbart ein Verfahren zur Wasserstoffproduktion in kalten Klimazonen.

DE 2 061 455 A offenbart eine Vorrichtung zum Reformieren von Kohlenwasserstoffen unter Druck. Es wird eine Wärmeaustauschkammer und Schachtkammer offenbart, welche durch einen Doppelzwischenboden getrennt sind.

EP 1 094 031 A1 offenbart einen Zylindrischen Einrohrreformer. Der Reformer umfasst eine Wärmerückgewinnungsschicht welche um eine Katalysatorschicht angeordnet ist.

WO 2017/058744 A2 offenbart eine Anordnung von Rauchgastunneln in einem Reformersystem. WO 2010/149361 A2 offenbart einen Reformer zur Herstellung von Synthesegas umfassend: einen Reformerfeuerraum mit einem Reformerboden, Reformerwänden und einer Reformerdecke und eine Mehrheit von Reformerröhre welche in dem Reformerfeuerraum angeordnet sind. Ein Kanal ist zwischen dem ersten Reformerrohr und dem zweiten Reformerrohr auf dem Reformerboden angeordnet.

Die vorliegende Erfindung hat die Aufgabe, einen Reformer bereitzustellen, welcher die eingangs beschriebenen Nachteile des Stands der Technik nicht aufweist. Der Reformer sollte einen Aufbau aufweisen, welcher die Temperatur im Bereich der Bodenplatte deutlich reduziert und dabei möglichst wenige Änderungen an der feuerfesten Isolierschicht erfordert.

Die Aufgabe der Erfindung wird überraschenderweise durch einen Reformer zur Herstellung von Synthesegas und/oder Dehydrierung von Propan oder Butan gemäß Anspruch 1 gelöst. Vorteilhafte Ausgestaltungen gehen aus den Unteransprüchen hervor.

Die Erfindung umfasst des Weiteren eine Anlage zur Herstellung von Ammoniak, Ammoniak und Harnstoff, Wasserstoff und Methanol umfassend den erfindungsgemäßen Reformer.

In einer weiteren Ausgestaltung umfasst die Erfindung die Verwendung des erfindungsgemäßen Reformers zur Herstellung eines Gasgemisches mindestens umfassend Wasserstoff und Kohlenmonoxid.

Die Erfindung umfasst des Weiteren ein Verfahren zur Herstellung von Synthesegas. Vorteilhafte Ausgestaltungen gehen aus den Unteransprüchen hervor.

Der erfindungsgemäße Reformer zur Herstellung von Synthesegas, Wasserstoff und/oder Dehydrierung von Propan oder Butan umfasst mindestens die nachfolgenden Komponenten. Der Ausdruck "und/oder Dehydrierung von Propan oder Butan" umfasst im Sinne der Erfindung auch Isomere und Gemische von Propan und Butan. Im Sinne der Erfindung umfasst der Ausdruck "Synthesegas" ein Gemisch aus dampfreformierten Kohlenwasserstoffen und überschüssigen Wasserdampf. Ein Reformerfeuerraum umfasst einem Reformerboden, Reformerwände und eine Reformerdecke. Ein erstes Reformerrohr und ein zweites Reformerrohr sind mindestens abschnittsweise in dem Reformerfeuerraum angeordnet. Der Ausdruck "mindestens abschnittsweise" bedeutet im Sinne der Erfindung, dass zumindest ein Teil des ersten Reformerrohrs und des zweiten Reformerrohr innerhalb des Reformerfeuerraums verläuft. Im Regelfall passiert nur ein Teilabschnitt des ersten Reformerrohrs und des zweiten Reformerrohrs die Brennkammer, d.h. das erste Reformerrohr und das zweite Reformerrohr werden in die Brennkammer hineingeführt und anschließend aus der Brennkammer hinausgeführt. Der Ausdruck "erstes Reformerrohr und ein zweites Reformerrohr" beschreiben im Sinne der Erfindung die erforderliche Mindestkonfiguration, im Regelfall sind weitere Reformerrohre, beispielsweise 30 bis 1800 Reformerrohre im Reformerfeuerraum angeordnet. Die Reformerrohre sind mit einem Katalysator bzw. einer Katalysatorschüttung gefüllt, bevorzugt, Nickel und/oder Verbindungen und/oder Gemische mit anderen Verbindungen davon. Des Weiteren ist mindestens ein innerhalb des Reformerfeuerraums angeordneter Reformerbrenner vorhanden. Im Regelfall sind mehrere Reformerbrenner im Reformerfeuerraum angeordnet, beispielsweise 15 bis 600 Reformerbrenner. Der Ausdruck "innerhalb des Reformerfeuerraums angeordneter Reformerbrenner" umfasst im Sinne der Erfindung alle im Reformerfeuerraum oder mit dem Reformerfeuerraum in Verbindung stehenden Brenner, wobei die Brenngase der Brenner in den Reformerfeuerraum geleitet werden. Der erfindungsgemäße Reformer zur Herstellung von Synthesegas ist dadurch gekennzeichnet, dass zwischen dem ersten Reformerrohr und dem zweiten Reformerrohr ein Kühlkanal auf dem Reformerboden oder unterhalb des Reformerbodens angeordnet ist. Der Kühlkanal kann im Sinne der Erfindung sowohl ober- als auch unterhalb des Reformerbodens installiert werden. Der Reformerboden umfasst im Sinne der Erfindung bevorzugt ein Blech, das durch die statisch tragenden Träger versteift ist. Der Ausdruck "Kühlkanal" umfasst im Sinne der Erfindung auf oder unterhalb dem(des) Reformboden(s) angeordnete Kanäle, Passagen, Rohre welche geeignet sind eine geeignetes flüssiges oder gasförmiges Kühlmedium über den Reformerboden zu leiten. Die Kühlkanäle sind so ausgelegt, dass das Kühlmedium Wärmeenergie von dem Reformerboden aufnehmen kann, d.h. das Kühlmedium sich erwärmen kann. Die Wände der Kühlkanäle können unter anderem Steine (beispielsweise Mauersteine), Metallplatten oder keramische Wandelemente umfassen. Die Durchführung eines Kühlmediums, beispielsweise Luft, ermöglicht eine deutliche Reduzierung der Temperatur des Reformerbodens und damit eine erwartete deutliche Erhöhung der Lebensdauer des Reformerbodens, sowie eine merkliche Reduzierung der Wärmeabstrahlung auf sich unterhalb des Reformerbodens befindliche Personen oder Ausrüstungen.

Bevorzugt sind das erste Reformerrohr und das zweite Reformerrohr sowie in der Regel weitere Reformerrohre außerhalb des Reformerfeuerraums mit einem Sammelsystem verbunden. Besonders bevorzugt ist das Sammelsystem unterhalb des Reformerbodens angeordnet.

Weiterhin bevorzugt ist das erste Sammelsystem in einer Unterbodenkammer unterhalb der Reformerkammer angeordnet. Bevorzugt ist die Unterbodenkammer begehbar.

In einer bevorzugten Ausführungsform umfasst der Reformerboden metallische, mineralische oder keramische Werkstoffe, besonders bevorzugt metallische Platten. Bevorzugt weisen diese metallischen Platten beim Betrieb des Reformers eine Temperatur von unter 100°C auf, um die thermische Ausdehnung gering zu halten.

Bevorzugt ist eine feuerfeste Isolierschicht auf dem Reformerboden und Kühlkanal angeordnet. Die feuerfeste Isoliergesamtschicht besteht bevorzugt (bzw. enthält) aus mehreren Schichten unterschiedlicher keramischer Materialien (bzw. enthält diese), die verschiedene Temperaturbeständigkeiten, Isolierungseigenschaften und Beständigkeit gegen mechanischen Abtrag aufweisen. Es sind dies beispielsweise dichte oder poröse Steine, Feuerleichtbetone, Isolierplatten und/oder Bauteile auf Basis von keramischen Fasern.

In einer weiteren bevorzugten Ausführungsform ist ein zweiter Kühlkanal auf den Reformerwänden und/oder der Reformerdecke angeordnet. Die Anbringung des zweiten Kühlkanals bzw. Kühlkanäle ermöglicht eine Temperaturreduktion in sonst thermisch stark beanspruchten Bereichen des Reformers.

Ein Rauchgasentlüftungskanal ist zwischen dem ersten Reformerrohr und dem zweiten Reformerrohr angeordnet. Der Rauchgasentlüftungskanal ist bevorzugt in Form eines gemauerten Kanals ausgeführt, wobei der Kanal Öffnungen (Rauchgaseinlassöffnungen) zur Aufnahme des Brenngases aus dem Reformerfeuerraum aufweist. Der Rauchgasentlüftungskanal ist oberhalb des Kühlkanales angeordnet, insbesondere bevorzugt auf einer feuerfesten Isolierschicht oberhalb des Kühlkanals.

In einer weiteren bevorzugten Ausführungsform der Erfindung ist der Rauchgasentlüftungskanal im Reformerboden verankert.

Bevorzugt ist der Rauchgasentlüftungskanal mit einer Rauchgasfördereinrichtung (sowohl drückend oder saugend möglich) verbunden.

Der Kühlkanal ist mit einer Verbrennungsluftfördereinrichtung verbunden. Der Ausdruck "Verbrennungsluftfördereinrichtung" umfasst im Sinne der Erfindung sowohl (Kühlmedium) drückende als auch (Kühlmedium) saugende Vorrichtungen (Gebläse).

Durch diese Ausgestaltung kann die für die Verbrennung in den Reformerbrennern benötigte Luft (Verbrennungsluft) energetisch vorteilhaft vorgewärmt werden.

Bevorzugt ist der Kühlkanal mit einer Luftansaugöffnung außerhalb der Reformerkammer verbunden, so dass der Kühlkanal mit Außenluft als Kühlmedium durchflutet werden kann.

Bevorzugt ist die Luftansaugöffnung und/oder eine zweite Luftansaugöffnung (mit einer Luftansaugöffnung in der/innerhalb der Unterbodenkammer) über den Kühlkanal mit einer ersten Hilfsfördereinrichtung verbunden ist/sind.

In einer weiteren Ausgestaltung ist eine zweite Hilfsfördereinrichtung über die Luftansaugöffnung mit dem der Kühlkanal verbunden, bevorzugt zwecks Verstärkung der saugenden Wirkung der Verbrennungsluftfördereinrichtung.

In einer weiteren Ausgestaltung ist der Kühlkanal über/mit der zweiten Hilfsfördereinrichtung verbunden, die das Kühlmedium in die Kühlkanäle hineindrückt.

Die erste Hilfsfördereinrichtung und/oder die zweite Hilfsfördereinrichtung können außerhalb des Reformerfeuerraums und in Kühlrichtung (Fließrichtung des Kühlmediums) vor dem Kühlkanal drückend und/oder in Kühlrichtung nach dem Reformerfeuerraum saugend angeordnet sein.

Bevorzugt ist die Verbrennungsluftfördereinrichtung mit dem Reformerbrenner über einen ersten Wärmetauscher innerhalb des Rauchgasentlüftungskanals verbunden. Die Einbindung des ersten Wärmetauschers erlaubt die Nutzung der Abwärme aus dem Rauchgasentlüftungskanal für die Vorwärmung der Brennerluft.

In einer weiteren bevorzugten Ausführungsform der Erfindung ist der Wärmetauscher in dem Rauchgasentlüftungskanal oder einem Sammelraum von mehreren Entlüftungskanälen angeordnet.

Bevorzugt ist ein zweiter Wärmetauscher in Prozessrichtung (Fließrichtung der Ströme des Prozesses oder der Kühlmedien) vor und/oder nach der Verbrennungsluftfördereinrichtung oder optional der ersten Hilfsfördereinrichtung angeordnet.

In einer bevorzugten Ausführungsform ist der Kühlkanal mit einer zweiten Luftansaugöffnung innerhalb/an der Unterbodenkammer verbunden. Der Ausdruck "innerhalb/an" umfasst bevorzugt im Sinne der Erfindung eine Positionierung der zweiten Luftansaugöffnung innerhalb der Unterbodenkammer oder eine Positionierung der zweiten Luftansaugöffnung an bzw. an einer Außenwand. Besonders bevorzugt ist der Kühlkanal über/mit der ersten Hilfsfördereinrichtung mit der zweiten Luftansaugöffnung verbunden. Ein Ansaugen der Luft aus der Unterbodenkammer" verringert noch weiter die Temperatur im unteren Bereich des Reformers und die Temperaturbelastung des Reformerbodens.

Alternativ ist es möglich, über eine zweite Hilfsfördereinrichtung Umgebungsluft in den Doppelboden zu drücken.

Die Erfindung umfasst des Weiteren eine Anlage zur Herstellung von Ammoniak, Ammoniak und Harnstoff, Wasserstoff und Methanol, sowie Anlagen zur Dehydrierung von Propan und Butan umfassend einen wie voranstehend beschriebenen Reformer.

In einer weiteren Ausgestaltung umfasst die Erfindung die Verwendung eines wie voranstehend beschriebenen Reformers zur Herstellung eines Gasgemisches mindestens umfassend Wasserstoff und Kohlenmonoxid.

Die Erfindung umfasst weiterhin ein Verfahren zur Herstellung von Synthesegas mindestens umfassend die folgenden Schritte. In einem ersten Schritt wird ein Kohlenwasserstoffgemische (bevorzugt Methan/Erdgas) und Wasserdampf bei einer Temperatur von 400 °C bis 700 °C und einem Druck von 10 bar bis 50 bar in einen Reformer eingeleitet. Der Reformer umfasst mindestens einen Reformerfeuerraum mit einem Reformerboden, Reformerwänden und eine Reformerdecke. Ein erstes Reformerrohr und ein zweites Reformerrohr sind mindestens abschnittsweise in dem Reformerfeuerraum angeordnet. Der Ausdruck "mindestens abschnittsweise" bedeutet im Sinne der Erfindung, dass zumindest ein Teil des ersten Reformerrohrs und des zweiten Reformerrohr innerhalb des Reformerfeuerraums verläuft. Im Regelfall passiert nur ein Teilabschnitt des ersten Reformerrohrs und des zweiten Reformerrohrs die Brennkammer, d.h. das erste Reformerrohr und das und ein zweite Reformerrohr werden in die Brennkammer hineingeführt und anschließend aus der Brennkammer hinausgeführt. Der Ausdruck "erstes Reformerrohr und ein zweites Reformerrohr" beschreiben im Sinne der Erfindung die erforderliche Mindestkonfiguration, im Regelfall sind weitere Reformerrohre, beispielswies 30 bis 1800 im Reformerfeuerraum angeordnet. Des Weiteren ist mindestens ein innerhalb des Reformerfeuerraums angeordneter Reformerbrenner vorhanden. Im Regelfall sind mehrere Reformerbrenner im Reformerfeuerraum angeordnet, beispielsweise 15 bis 600 Reformerbrenner. Ein Rauchgasentlüftungskanal ist zwischen dem ersten Reformerrohr und dem zweiten Reformerrohr angeordnet und optional ist das erste Reformerrohr und das zweite Reformerrohr außerhalb der Reformerkammer mit einem Sammelsystem verbunden sind und das Sammelsystem in einer Unterbodenkammer unterhalb der Reformerkammer angeordnet. Der erfindungsgemäße Reformer zur Herstellung von Synthesegas ist dadurch gekennzeichnet, dass zwischen dem ersten Reformerrohr und dem zweiten Reformerrohr ein Kühlkanal auf dem oder unterhalb (des) Reformerboden(s) angeordnet ist. Der Ausdruck "Kühlkanal" umfasst im Sinne der Erfindung auf dem oder unterhalb des Reformboden(s) angeordnete Kanäle, Passagen, Rohre welche geeignet sind, eine geeignetes flüssiges oder gasförmiges Kühlmedium über den Reformerboden zu leiten. Die Kühlkanäle sind so ausgelegt, dass das Kühlmedium Wärmeenergie von dem Reformerboden aufnehmen kann, d.h. das Kühlmedium sich erwärmen kann. Die Wände der Kühlkanäle können nicht abschließend Steine (beispielsweise Mauersteine), Metallplatten oder keramische Wandelemente umfassen. Die Durchführung eines Kühlmediums, beispielsweise Luft ermöglicht eine deutliche Reduzierung der Temperatur des Reformerbodens und damit eine erwartete deutliche Erhöhung der Lebensdauer des Reformerbodens. Das erste Reformerrohres und das zweiten Reformerrohres, sind mit einem geeigneten Katalysator bzw. Katalysatorschüttung gefüllt, beispielsweise Nickel und/oder Verbindungen und/oder Gemische davon. Nach Durchleitung des Kohlenwasserstoffgemisches (bevorzugt Methan/Erdgas, LPG, Naphtha, Raffinerieabgase) und Wasserdampf durch das ersten Reformerrohre und des zweiten Reformerrohre wird eines Gemisch mindestens umfassend Wasserstoff und Kohlenmonoxid, bzw. Synthesegasgemisch erhalten. Das erfindungsgemäße Verfahren ist dadurch gekennzeichnet, dass ein Kühlmedium, bevorzugt Luft durch den Kühlkanal geleitet wird. Als Kühlmedien kommen neben Gasen auch flüssige Medien, beispielsweise Wasser, wässrige Lösungen, organische Lösungen, Öle oder Silikonöle in Frage. Die Führung des Kühlmediums verringert deutlich die Temperatur der Bodenplatte. Diese Temperatur Erniedrigung verringert maßgeblich die Materialermüdung der Bodenplatte und ermöglicht eine weniger dicke Auslegung der Isolierschicht auf der Bodenplatte und damit auch das auf die Bodenplatte wirkende Gewicht.

Das Kühlmedium weist eine Eintrittstemperatur von -20 °C bis 100 °C auf. Bevorzugt wird der Kühlkanal mit Außenluft oder Luft aus der Unterbodenkammer durchflutet Die Durchflutung mit Außenluft stellt die einfachste Realisierung einer Versorgung mit Kühlmedium dar. Ein Ansaugen der Luft aus dem häufig unter dem Reformerbodens befindlichen Raum, auch "Unterbodenkammer" verringert noch weiter die Temperatur im unteren Bereich des Reformers.

Der Kühlkanal wird mit einer Fördereinrichtung im Saugbetrieb betrieben. Die Fördereinrichtung ist dabei mit dem Reformerbrenner für die Bereitstellung der Verbrennungsluft verbunden. Die genannte Verschaltung ermöglicht eine Vorwärmung der Luft für den Reformerbrenner über der vom Kühlmedium von dem Reformerboden aufgenommenen Wärmeenergie.

Die Erfindung wird im Folgenden anhand eines Beispiels näher erläutert. Das Beispiel schränkt dabei die Erfindung in keinem Maße ein.

### Beispiel (Vergleich der zu erwartenden Temperaturen)

In einer Simulationsrechnung wurden die zu erwartenden Temperaturen auf dem Reformerboden mit einem Kühlkanal auf dem Boden (Beispiel) und ohne Kühlkanal auf dem Boden (Vergleichsbeispiel) verglichen. Der sonstige Aufbau eines Primärreformers (Abmessung, Anzahl Reformerrohre) ist bei beiden Beispielen identisch.

**Tabelle 1: Abschätzung der Reformerbodentemperaturen**

| **Bodenausführung** | **Vergleichsbeispiel** | **Beispiel (erfindungsgemäß)** |
|---|---|---|
| Temperatur im Auslegungsfall | 100°C | 65°C |
| Maximaltemperatur bei schlechten Kühlbedingungen (Sommer, Tag, kein Wind, Reformermitte) | 150°C | 80°C |
| Minimaltemperatur bei besten Kühlbedingungen (Winter, Nacht, Wind, Reformerrand) | 60°C | 50°C |

Die in der Tabelle 1 abgeschätzten Temperaturen zeigen eine deutliche Temperaturerniedrigung im erfindungsgemäßen Beispiel. Dies verringert deutlich die Materialbelastung und Materialermüdung des Reformerbodens. Besonders bevorzugt lassen sich die Temperaturschwankungen durch Regeleinrichtungen reduzieren, mit denen sich der Kühlmediumsfluss günstig einstellen lässt.

Des Weiteren wird die Erfindung anhand der folgenden Figuren näher erläutert. Die Figuren beschränken dabei nicht den Schutzumfang der Erfindung, sondern dienen nur der beispielhaften Erläuterung. Die Figuren sind nicht maßstabsgetreu.

Es zeigen:
Figur 1 einen Querschnitt des erfindungsgemäßen Reformers,
Figur 2 einen Querschnitt einer bevorzugten Ausführungsform des erfindungsgemäßen Reformers,
Figur 3 eine schematische Ansicht entlang der Schnittachse A aus Figur 2 und
Figur 4 eine weitere schematische Ansicht entlang der Schnittachse A aus Figur 2.

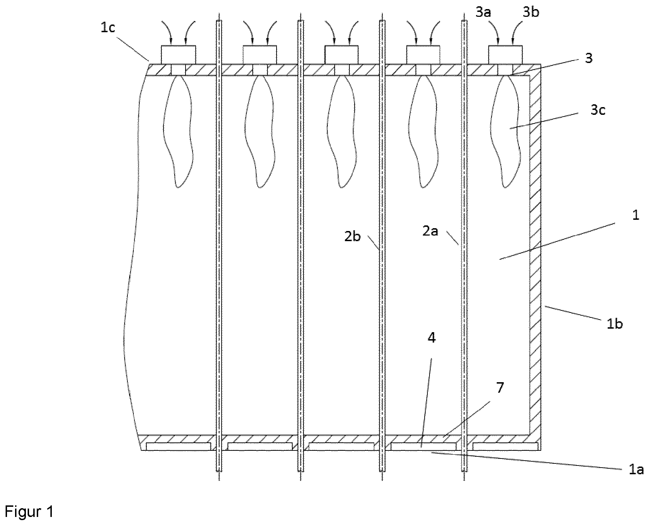

Figur 1 zeigt einen Querschnitt des erfindungsgemäßen Reformers. Ein Reformerfeuerraum (1) umfasst einem Reformerboden (1a), Reformerwände (1b) und eine Reformerdecke (1c). Auf dem Reformerboden (1a) ist eine Isolierschicht (7) angeordnet. Ein erstes Reformerrohr (2a) und ein zweites Reformerrohr (2b) sind mindestens abschnittsweise in dem Reformerfeuerraum (1) angeordnet. Zudem sind noch weitere nicht explizit markierte Reformerrohre im Reformerfeuerraum (1) angeordnet. Die Reformerrohre (2a/2b) sind mit einem Katalysator bzw. einer Katalysatorschüttung gefüllt, bevorzugt Nickel und/oder Verbindungen und/oder Gemische davon. Des Weiteren ist mindestens ein innerhalb des Reformerfeuerraums angeordneter Reformerbrenner (3) vorhanden. Im Regelfall sind mehrere Reformerbrenner (3) im Reformerfeuerraum (1) angeordnet. Der Reformerbrenner (3) wird mit Brenngas (3a) und Brennluft (3b) versorgt. Das Brenngas (3a) und die Brennluft (3b) können über verschiedene Leitungen oder eine Leitung (nicht gezeigt) bereitgestellt werden. Der Ausdruck "innerhalb" beschreibt/umfasst im Sinne der Erfindung Reformerbrenner, welche in den Reformerfeuerraum wirken können. Der erfindungsgemäße Reformer umfasst zwischen dem ersten Reformerrohr (2a) und dem zweiten Reformerrohr (2b) ein Kühlkanal (4) auf dem Reformerboden (1a). Die Durchführung eines Kühlmediums, beispielsweise Luft ermöglicht eine deutliche Reduzierung der Temperatur des Reformerbodens (1a) und damit eine erwartete deutliche Erhöhung der Lebensdauer des Reformerbodens (1a).

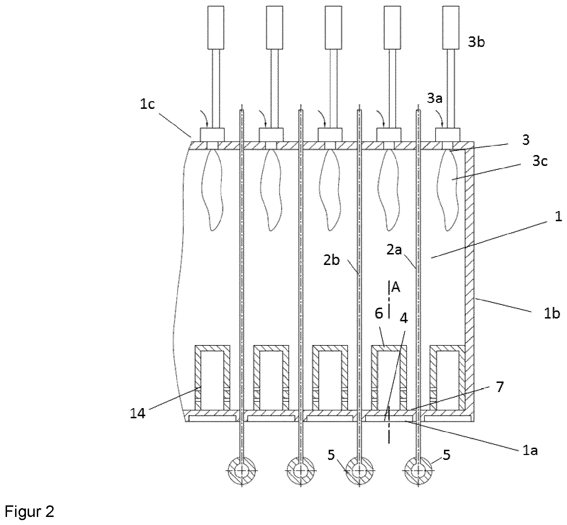

Figur 2 zeigt einen Querschnitt einer bevorzugten Ausführungsform des erfindungsgemäßen Reformers. Der grundsätzliche Aufbau entspricht den unter Figur 1 beschriebenen. Ein Rauchgasentlüftungskanal (6) ist zwischen dem ersten Reformerrohr (2a) und dem zweiten Reformerrohr (2b) angeordnet ist. Das erste Reformerrohr (2a) und das zweite Reformerrohr (2b) gehen in ein Sammelsystem (5) über. Der Rauchgasentlüftungskanal (6) ist bevorzugt in Form eines gemauerten Kanals ausgeführt, wobei der Rauchgasentlüftungskanal (6) Rauchgaseinlassöffnungen (14) zur Aufnahme des Rauchgases aus dem Reformerfeuerraum aufweist. Der Rauchgasentlüftungskanal (6) ist bevorzugt oberhalb des Kühlkanales (4) angeordnet, insbesondere bevorzugt auf der feuerfesten Isolierschicht (7) oberhalb des Kühlkanals (4).

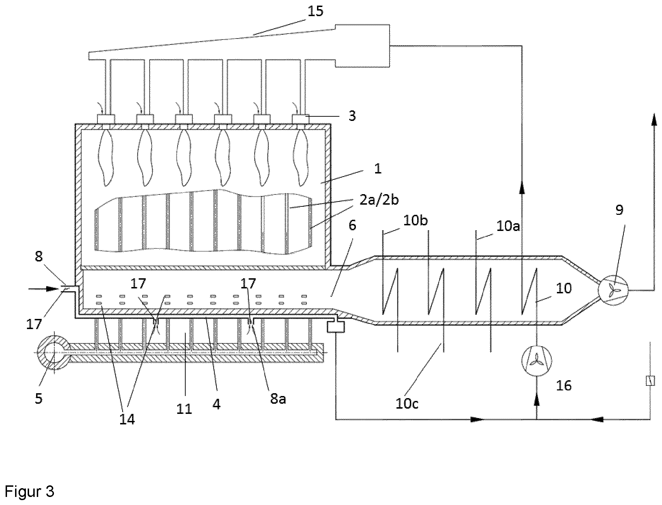

Figur 3 zeigt eine schematische Ansicht entlang der Schnittachse A aus Figur 2. Der grundsätzliche Aufbau des Reformerfeuerraum (1) entspricht dem in Figur 2 beschriebenen. Die Abluft aus den Rauchgasentlüftungskanal (6) dient zur Erwärmung von Wärmetauschern (10/10a/10b/10c) und zur Vorwärmung der Luft für die Reformerbrenner (3) welche über ein Sammelsystem (15) verbunden sind. Ein Fördersystem (9) ermöglicht die Abführung der Rauchgase aus dem Rauchgasentlüftungskanal (6). In der gezeigten Ausführung wird über die Ansaugöffnungen (8) und (8a) Luft durch den Kühlkanal (4) eingeleitet. Die Verbrennungsluftfördereinrichtung (16) erzeugt den im Kühlkanal zum Ansaugen der Luft erforderlichen Unterdruck. Über die zweite Luftansaugöffnung (8a) wird warme Luft aus der Unterbodenkammer (11) angesaugt. Damit kann die Temperatur innerhalb der Unterbodenkammer (11) wirksam abgesenkt werden und die thermische Belastung des Reformerbodens (1a) reduziert werden. Über Regelklappen (17) kann der Fluss des Kühlmediums weiter gesteuert werden.

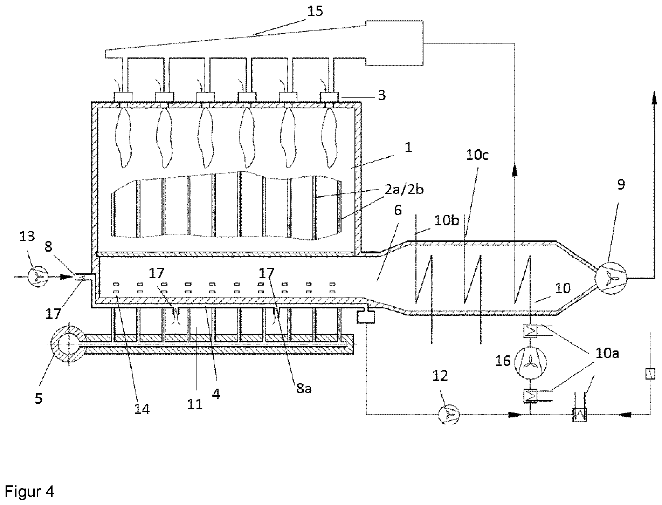

Figur 4 zeigt eine weitere schematische Ansicht entlang der Schnittachse A aus Figur 2. Der grundsätzliche Aufbau entspricht den unter Figur 3 beschriebenen. Zur Verbesserung der Energieausnutzung sind noch weitere Wärmetauscher (10a) vorgesehen. Durch die Aufwärmung der Verbrennungsluft in den Kühlkanälen (4) können die Wärmetauscher kleiner ausgeführt oder komplett eingespart werden. Über eine zusätzliche erste Hilfsfördereinrichtung (12) und zweite Hilfsfördereinrichtung (13) können die Ströme des Kühlmediums im Kühlkanal (4) weiter verbessert werden.

### Bezugszeichenliste

- (1): Reformerfeuerraum
- (1a): Reformerboden
- (1b): Reformerwände
- (1c): Reformerdecke
- (2a): erstes Reformerrohr
- (2b): zweites Reformerrohr
- (3): Reformerbrenner
- (4): Kühlkanal
- (5): Sammelsystem
- (6): Rauchgasentlüftungskanal
- (7): feuerfeste Isolierschicht
- (8): Luftansaugöffnung
- (8a): zweite Luftansaugöffnung
- (9): Rauchgasfördereinrichtung
- (10): erster Wärmetauscher
- (10a): zweiter Wärmetauscher
- (10b): dritter Wärmetauscher
- (10c): vierter Wärmetauscher
- (11): Unterbodenkammer
- (12): erste Hilfsfördereinrichtung
- (13): zweite Hilfsfördereinrichtung
- (14): Rauchgaseinlassöffnungen
- (15): Brennersammelsystem
- (16): Verbrennungsluftfördereinrichtung
- (17): Regelklappen

## Patentansprüche

1. Reformer zur Herstellung von Synthesegas, Wasserstoff und/oder Dehydrierung von Propan oder Butan umfassend mindestens die folgenden Komponenten:
- einen Reformerfeuerraum (1) mit einem Reformerboden (1a), Reformerwänden (1b) und einer Reformerdecke (1c);
- ein erstes Reformerrohr (2a) und ein zweites Reformerrohr (2b), wobei das erstes Reformerrohr (2a) und das zweite Reformerrohr (2b) mindestens abschnittsweise in dem Reformerfeuerraum (1) angeordnet sind;
- mindestens einen innerhalb des Reformerfeuerraum (1) angeordneten Reformerbrenner (3);
- **dadurch gekennzeichnet, dass** zwischen dem ersten Reformerrohr (2a) und dem zweiten Reformerrohr (2b) ein Kühlkanal, zur Kühlung des Reformerbodens auf einen Bereich zwischen 80°C und 50°C (4) auf dem oder unterhalb des Reformerboden (1a) angeordnet ist, dass der Kühlkanal (4) mit einer Verbrennungsluftfördereinrichtung (16) in Form eines Gebläses verbunden ist und dass der Reformerfeuerraum (1) räumlich von dem Kühlkanal (4) getrennt ist und dass ein Rauchgasentlüftungskanal (6) zwischen dem ersten Reformerrohr (2a) und dem zweiten Reformerrohr (2b), wobei der Rauchgasentlüftungskanal (6) oberhalb des Kühlkanales (4) angeordnet ist.

2. Reformer nach Anspruch 1, **dadurch gekennzeichnet, dass** das erste Reformerrohr (2a) und das zweite Reformerrohr (2b) außerhalb der Reformerfeuerraum (1) mit einem Sammelsystem (5) verbunden sind, bevorzugt das Sammelsystem (5) unterhalb des Reformerbodens (1a) angeordnet ist.

3. Reformer nach Anspruch 2, **dadurch gekennzeichnet, dass** das erste Sammelsystem (5) in einer Unterbodenkammer (11) unterhalb der Reformerkammer (1) angeordnet ist.

4. Reformer nach einem der vorangehenden Ansprüche, **dadurch gekennzeichnet, dass** der Reformerboden (1a) metallische, mineralische, oder keramische Werkstoffe umfasst, bevorzugt metallische Platten.

5. Reformer nach einem der vorangehenden Ansprüche, **dadurch gekennzeichnet, dass** eine feuerfeste Isolierschicht (7) auf dem Reformerboden (1a) und Kühlkanal (4) angeordnet ist.

6. Reformer nach einem der vorangehenden Ansprüche, **dadurch gekennzeichnet, dass** ein zweiter Kühlkanal auf den Reformerwänden (1b) und/oder der Reformerdecke (1c) angeordnet ist.

7. Reformer nach einem der vorangehenden Ansprüche, **dadurch gekennzeichnet, dass** der Rauchgasentlüftungskanal (6) im Reformerboden (1a) verankert ist.

8. Reformer nach einem der vorangehenden Ansprüche, **dadurch gekennzeichnet, dass** der Rauchgasentlüftungskanal (6) mit einer Rauchgasfördereinrichtung (9) verbunden ist.

9. Reformer nach einem der vorangehenden Ansprüche, **dadurch gekennzeichnet, dass** der Kühlkanal (4) mit einer Luftansaugöffnung (8) außerhalb der Reformerkammer (1) verbunden ist

10. Reformer nach Anspruch 9, **dadurch gekennzeichnet, dass** die Luftansaugöffnung (8) und/oder eine zweite Luftansaugöffnung (8a) in der/innerhalb der Unterbodenkammer (11) über den Kühlkanal (4) mit einer ersten Hilfsfördereinrichtung (12) verbunden ist/sind.

11. Reformer Anspruch 9 oder 10, **dadurch gekennzeichnet, dass** eine zweite Hilfsfördereinrichtung (13) über die Luftansaugöffnung (8) mit dem der Kühlkanal (4) verbunden ist.

12. Reformer nach einem der Ansprüche 9 bis 11, **dadurch gekennzeichnet, dass** die Verbrennungsfördereinrichtung (16) mit dem Reformerbrenner (3) über einen ersten Wärmetauscher (10) innerhalb des Rauchgasentlüftungskanal (6) verbunden ist.

13. Reformer nach einem der Ansprüche 9 bis 12, **dadurch gekennzeichnet, dass** ein zweiter Wärmetauscher (10a) in Prozessrichtung vor und/oder nach der Verbrennungsfördereinrichtung (16) angeordnet ist.

14. Anlage zur Herstellung von Ammoniak, Ammoniak und Harnstoff, Wasserstoff und Methanol sowie zur Dehydrierung von Propan und Butan umfassend einen Reformer nach einem der Ansprüche 1 bis 13.

15. Verwendung eines Reformers nach einem der Ansprüche 1 bis 13 zur Herstellung eines Gasgemisches mindestens umfassend Wasserstoff und Kohlenmonoxid.

16. Verfahren zur Herstellung von Synthesegas mindestens umfassend die folgenden Schritte:
a.) Einleiten eines Kohlenwasserstoffgemisches und Wasserdampf bei einer Temperatur von 400 °C bis 700 °C und einem Druck von 10 bar bis 50 bar in einen Reformer mindestens umfassend:
- eine Reformerkammer (1) mit einem Reformerboden (1a);
- ein erstes Reformerrohr (2a) und ein zweites Reformerrohr (2b), wobei das erstes Reformerrohr (2a) und das zweite Reformerrohr (2b) mindestens abschnittsweise in der Reformerkammer (1) angeordnet sind;
- mindestens einen innerhalb der Reformerkammer (1) angeordneten Reformerbrenner (3);
- ein Rauchgasentlüftungskanal (6) zwischen dem ersten Reformerrohr (2a) und dem zweiten Reformerrohr (2b);
- optional das erste Reformerrohr (2a) und das zweite Reformerrohr (2b) außerhalb der Reformerkammer (1) mit einem Sammelsystem (5) verbunden sind und das Sammelsystem (5) in einer Unterbodenkammer (11) unterhalb der Reformerkammer (1) angeordnet ist; wobei
- zwischen dem ersten Reformerrohr (2a) und dem zweiten Reformerrohr (2b) ein Kühlkanal (4), zur Kühlung des Reformerbodens auf einen Bereich zwischen 80°C und 50°C, auf dem Reformerboden (1a) angeordnet ist;
b.) Erhalten eines Gemisches mindestens umfassend Wasserstoff und Kohlenmonoxid;
**dadurch gekennzeichnet, dass** ein Kühlmedium (12) durch den Kühlkanal (4) geleitet wird und
**dass** das Kühlmedium eine Eintrittstemperatur von -20 °C bis 100 °C aufweist.

17. Verfahren nach Anspruch 16, **dadurch gekennzeichnet, dass** der Kühlkanal (4) mit Außenluft oder Luft aus der Unterbodenkammer (11) durchflutet wird.

18. Verfahren nach einem der Ansprüche 16 oder 17, **dadurch gekennzeichnet, dass** der Kühlkanal (4) mit einer Verbrennungsluftfördereinrichtung (16) mit optional zusätzlicher Hilfsfördereinrichtung (12) im Saugbetrieb betrieben wird, wobei die Verbrennungsluftfördereinrichtung (16) mit dem Reformerbrenner (3) für die Bereitstellung der Verbrennungsluft verbunden ist.

## Claims

1. A reformer for the production of synthesis gas, hydrogen and/or dehydrogenation of propane or butane comprising at least the following components:
- a reformer furnace (1) having a reformer bottom (1a), reformer walls (1b) and a reformer top (1c);
- a first reformer tube (2a) and a second reformer tube (2b), the first reformer tube (2a) and the second reformer tube (2b) being arranged at least in sections in the reformer furnace (1);
- at least one reformer burner (3) arranged inside the reformer combustion chamber (1);
- **characterized in that** between the first reformer tube (2a) and the second reformer tube (2b) a cooling channel for cooling the reformer bottom to a range between 80°C and 50°C (4) is arranged on or below the reformer bottom (1a), **in that** the cooling duct (4) is connected to a combustion air feed device (16) in the form of a fan, and **in that** the reformer furnace (1) is spatially separated from the cooling duct (4), and **in that** a flue gas venting duct (6) is arranged between the first reformer tube (2a) and the second reformer tube (2b), the flue gas venting duct (6) being arranged above the cooling duct (4).

2. Reformer according to claim 1, **characterized in that** the first reformer tube (2a) and the second reformer tube (2b) outside the reformer furnace (1) are connected to a collecting system (5), preferably the collecting system (5) is arranged below the reformer bottom (1a).

3. Reformer according to claim 2, **characterized in that** the first collection system (5) is arranged in an underfloor chamber (11) below the reformer chamber (1).

4. Reformer according to one of the preceding claims, **characterized in that** the reformer bottom (1a) comprises metallic, mineral, or ceramic materials, preferably metallic plates.

5. Reformer according to one of the preceding claims, **characterized in that** a refractory insulating layer (7) is arranged on the reformer bottom (1a) and cooling channel (4).

6. Reformer according to one of the preceding claims, **characterized in that** a second cooling channel is arranged on the reformer walls (1b) and/or the reformer top (1c).

7. Reformer according to one of the preceding claims, **characterized in that** the flue gas vent duct (6) is anchored in the reformer bottom (1a).

8. Reformer according to one of the preceding claims, **characterized in that** the flue gas venting duct (6) is connected to a flue gas conveying device (9).

9. Reformer according to any one of the preceding claims, **characterized in that** the cooling duct (4) is connected to an air intake opening (8) outside the reformer chamber (1)

10. Reformer according to claim 9, **characterized in that** the air intake opening (8) and/or a second air intake opening (8a) in/inside the underfloor chamber (11) is/are connected to a first auxiliary conveying device (12) via the cooling channel (4).

11. Reformer claim 9 or 10, **characterized in that** a second auxiliary conveying device (13) is connected to the cooling channel (4) via the air intake opening (8).

12. Reformer according to any one of claims 9 to 11, **characterized in that** the combustion conveying device (16) is connected to the reformer burner (3) via a first heat exchanger (10) inside the flue gas vent duct (6).

13. Reformer according to any one of claims 9 to 12, **characterized in that** a second heat exchanger (10a) is arranged upstream and/or downstream of the combustion conveying device (16) in the process direction.

14. Plant for the production of ammonia, ammonia and urea, hydrogen and methanol and for the dehydrogenation of propane and butane comprising a reformer according to any one of claims 1 to 13.

15. Use of a reformer according to any one of claims 1 to 13 for the production of a gas mixture at least comprising hydrogen and carbon monoxide.

16. Process for producing synthesis gas at least comprising the following steps:
a.) introducing a hydrocarbon mixture and steam at a temperature of 400 °C to 700 °C and a pressure of 10 bar to 50 bar into a reformer at least comprising:
- a reformer chamber (1) with a reformer bottom (1a);
- a first reformer tube (2a) and a second reformer tube (2b), the first reformer tube (2a) and the second reformer tube (2b) being arranged at least in sections in the reformer chamber (1)
- at least one reformer burner (3) arranged inside the reformer chamber (1);
- a flue gas venting duct (6) between the first reformer tube (2a) and the second reformer tube (2b);
- optionally, the first reformer tube (2a) and the second reformer tube (2b) are connected to a collection system (5) outside the reformer chamber (1), and the collection system (5) is arranged in an underfloor chamber (11) below the reformer chamber (1); wherein
- between the first reformer tube (2a) and the second reformer tube (2b) a cooling channel (4), for cooling the reformer bottom to a range between 80°C and 50°C, is arranged on the reformer bottom (1a);
b.) obtaining a mixture at least comprising hydrogen and carbon monoxide;
**characterized in that** a cooling medium (12) is passed through the cooling channel (4); and
that the cooling medium has an inlet temperature of -20 °C to 100 °C.

17. Method according to claim 16, **characterized in that** the cooling channel (4) is flown through with outside air or air from the underbody chamber (11).

18. Method according to one of the claims 16 or 17, **characterized in that** the cooling duct (4) is operated in suction mode with a combustion air conveying device (16) with optionally additional auxiliary conveying device (12), the combustion air conveying device (16) being connected to the reformer burner (3) for providing the combustion air.

## Revendications

1. Reformeur pour la production de gaz de synthèse, d'hydrogène et/ou la déshydrogénation du propane ou du butane, comprenant au moins les composants suivants :
- un foyer de reformeur (1) avec un fond de reformeur (1a), des parois de reformeur (1b) et un plafond de reformeur (1c) ;
- un premier tube de reformage (2a) et un deuxième tube de reformage (2b), le premier tube de reformage (2a) et le deuxième tube de reformage (2b) étant disposés au moins par sections dans le foyer de reformage (1) ;
- au moins un brûleur de reformage (3) disposé à l'intérieur du foyer de reformage (1) ;
- **caractérisé en ce qu'**un canal de refroidissement est disposé entre le premier tube de reformage (2a) et le deuxième tube de reformage (2b) pour refroidir le fond du reformeur dans une plage comprise entre 80°C et 50°C (4) sur ou sous le fond du reformeur (1a), **en ce que** le canal de refroidissement (4) est relié à un dispositif de transport d'air de combustion (16) sous la forme d'une soufflante et **en ce que** le foyer de reformeur (1) est séparé spatialement du canal de refroidissement (4) et **en ce qu'**un canal d'évacuation des gaz de fumée (6) est disposé entre le premier tube de reformeur (2a) et le deuxième tube de reformeur (2b), le canal d'évacuation des gaz de fumée (6) étant disposé au-dessus du canal de refroidissement (4).

2. Reformeur selon la revendication 1, **caractérisé en ce que** le premier tube de reformage (2a) et le deuxième tube de reformage (2b) sont reliés à un système collecteur (5) à l'extérieur du foyer de reformage (1), de préférence le système collecteur (5) est disposé en dessous du fond du reformeur (1a).

3. Reformeur selon la revendication 2, **caractérisé en ce que** le premier système collecteur (5) est disposé dans une chambre de fond (11) en dessous de la chambre de reformage (1).

4. Reformeur selon l'une des revendications précédentes, **caractérisé en ce que** le fond du reformeur (1a) comprend des matériaux métalliques, minéraux ou céramiques, de préférence des plaques métalliques.

5. Reformeur selon l'une des revendications précédentes, **caractérisé en ce qu'**une couche isolante réfractaire (7) est disposée sur le fond du reformeur (1a) et le canal de refroidissement (4).

6. Reformeur selon l'une des revendications précédentes, **caractérisé en ce qu'**un deuxième canal de refroidissement est disposé sur les parois (1b) du reformeur et/ou sur la couverture (1c) du reformeur.

7. Reformeur selon l'une des revendications précédentes, **caractérisé en ce que** le canal d'évacuation des gaz de combustion (6) est ancré dans le fond du reformeur (1a).

8. Reformeur selon l'une des revendications précédentes, **caractérisé en ce que** le canal d'évacuation des gaz de fumée (6) est relié à un dispositif de transport des gaz de fumée (9).

9. Reformeur selon l'une des revendications précédentes, **caractérisé en ce que** le canal de refroidissement (4) est relié à une ouverture d'aspiration d'air (8) à l'extérieur de la chambre de reformage (1).

10. Reformeur selon la revendication 9, **caractérisé en ce que** l'ouverture d'aspiration d'air (8) et/ou une deuxième ouverture d'aspiration d'air (8a) dans/à l'intérieur de la chambre inférieure (11) est/sont reliée(s) par le canal de refroidissement (4) à un premier dispositif de transport auxiliaire (12).

11. Reformeur revendication 9 ou 10, **caractérisé en ce qu'**un deuxième dispositif de transport auxiliaire (13) est relié au canal de refroidissement (4) via l'ouverture d'aspiration d'air (8).

12. Reformeur selon l'une des revendications 9 à 11, **caractérisé en ce que** le convoyeur de combustion (16) est relié au brûleur de reformage (3) par l'intermédiaire d'un premier échangeur de chaleur (10) à l'intérieur du conduit d'évacuation des fumées (6).

13. Reformeur selon l'une des revendications 9 à 12, **caractérisé en ce qu'**un deuxième échangeur de chaleur (10a) est disposé dans le sens du processus en amont et/ou en aval du dispositif de transport de combustion (16).

14. Installation pour la production d'ammoniac, d'ammoniaque et d'urée, d'hydrogène et de méthanol ainsi que pour la déshydrogénation de propane et de butane comprenant un reformeur selon l'une des revendications 1 à 13.

15. Utilisation d'un reformeur selon l'une des revendications 1 à 13 pour la production d'un mélange gazeux comprenant au moins de l'hydrogène et du monoxyde de carbone.

16. Procédé de production de gaz de synthèse comprenant au moins les étapes suivantes:
a.) Introduction d'un mélange d'hydrocarbures et de vapeur d'eau à une température de 400°C à 700°C et à une pression de 10 bars à 50 bars dans un reformeur comprenant au moins :
- une chambre de reformage (1) avec un fond de reformeur (1a) ;
- un premier tube de reformage (2a) et un deuxième tube de reformage (2b), le premier tube de reformage (2a) et le deuxième tube de reformage (2b) étant disposés au moins par sections dans la chambre de reformage (1) ;
- au moins un brûleur de reformage (3) disposé à l'intérieur de la chambre de reformage (1) ;
- un canal d'évacuation des gaz de fumée (6) entre le premier tube de reformage (2a) et le deuxième tube de reformage (2b) ;
- en option, le premier tube de reformage (2a) et le deuxième tube de reformage (2b) sont reliés à un système collecteur (5) à l'extérieur de la chambre de reformage (1) et le système collecteur (5) est disposé dans une chambre de fond (11) en dessous de la chambre de reformage (1) ; dans lequel
- entre le premier tube de reformage (2a) et le deuxième tube de reformage (2b), un canal de refroidissement (4) est disposé sur le fond du reformeur (1a) pour refroidir le fond du reformeur dans une plage comprise entre 80°C et 50°C ;
b.) l'obtention d'un mélange comprenant au moins de l'hydrogène et du monoxyde de carbone
**caractérisé en ce qu'**un milieu de refroidissement (12) est conduit à travers le canal de refroidissement (4), et
**en ce que** le milieu de refroidissement présente une température d'entrée de -20 °C à 100 °C.

17. Procédé selon la revendication 16, **caractérisé en ce que** le canal de refroidissement (4) est parcouru par de l'air extérieur ou de l'air provenant de la chambre sous le plancher (11).

18. Procédé selon l'une des revendications 16 ou 17, **caractérisé en ce que** le canal de refroidissement (4) est exploité en mode d'aspiration avec un dispositif de transport d'air de combustion (16) avec éventuellement un dispositif de transport auxiliaire supplémentaire (12), le dispositif de transport d'air de combustion (16) étant relié au brûleur de reformage (3) pour la mise à disposition de l'air de combustion.
